Europäisches Patentamt

European Patent Office

Office européen des brevets

(11) Publication number: **0 091 271**
**A2**

(12) **EUROPEAN PATENT APPLICATION**

(21) Application number: **83301793.2**

(22) Date of filing: **30.03.83**

(51) Int. Cl.³: **H 04 B 9/00**

(30) Priority: **30.03.82 JP 52505/82**

(43) Date of publication of application:
**12.10.83 Bulletin 83/41**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Higashi, Toru**
**413-3, Ikenoue-cho**
**Kumamoto-shi Kumamoto-ken(JP)**

(74) Representative: **Crawford, Andrew Birkby**
**A.A. THORNTON & CO. Northumberland House 303-306**
**High Holborn**
**London WC1V 7LE(GB)**

(54) **Data transmission apparatus.**

(57) A data transmission apparatus provided with a processor (12), optical receivers (19a, 19b, 21a, 21b) and optical transmitters (18a, 18b, 20a, 20b) at the processor side within a room (63, 64), which are connected to the input line and output line of the processor (12) respectively, terminal equipment (13, 14a, 14b, 14c, 15a, 15b, 15c, 16), and optical receivers (19c, 19d, 19e, 19f, 21c, 21d, 21e, 21f) and optical transmitters (18c, 18d, 18e, 18f, 20c, 20d, 20e, 20f) at the terminal equipment side in the room (63, 64), which are connected to the input lines and output lines of the terminal equipments respectively, so that data transmission between the terminal equipment (13, 14a, 14b, 14c, 15a, 15b, 15c, 16) and the processor (12) is performed without words by light propagation through space between the optical transmitters (18c-18f, 20c-20f) at the terminal equipment side and the optical receivers (19a, 19b, 21a, 21b) at the processor side and between the optical transmitters (18a, 18b, 20a, 20b) at the processor side and the optical receivers (19c-19f, 21c-21f) at the terminal equipment side.

./...

Fig. 3

0091271

# DATA TRANSMISSION APPARATUS

This invention relates to data transmission apparatus which makes possible data transmission, for example, between equipment within the same room by means of light propagation through space.

Recently, computer networks have rapidly progressed in response to demands of our information society and have been used for automatic measurement, automatic recording, or design computation, in the laboratory. Also, office automation systems have transferred from electronic-systematization of individual business machines to collective systematization of connecting by local communication networks a plurality of work stations to collect many apparatus, such as access devices data files, personal computers, and printers.

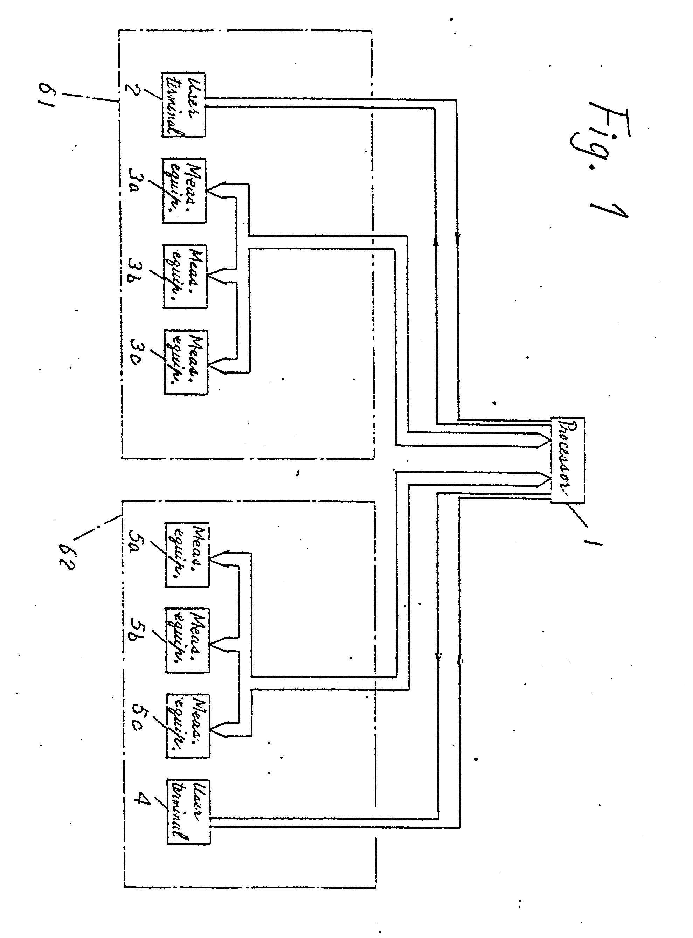

An example of a conventional laboratory automation block diagram is shown in Fig. 1, in which reference numeral 1 designates a processor, 2 and 4 designate display keyboards (to be hereinafter called the user terminals), and 3a, 3b, 3c, 5a, 5b and 5c designate measuring equipments (or printers or plotters) respectively, central processor 1 controlling all measuring equipments in room 61 and 62. The data transmission between processor 1 and the display keyboards or user terminals 2 and 4, and between the former and each of various measuring equipments 3a through 3c and 5a through 5c, employs two kinds of serial transmission and parallel transmission using bus line, in which pair cables, coaxial cables, or optical fiber cables, are used. In other words, serial transmission is used between user terminal 4 and processor 1 and bus line bidirectional parallel transmission is used between the respective measuring equipments 5a, 5b and 5c and between processor 1 and the respective measuring equipments 5a, 5b and 5c. The above description is for room 62, and the same goes for room 61.

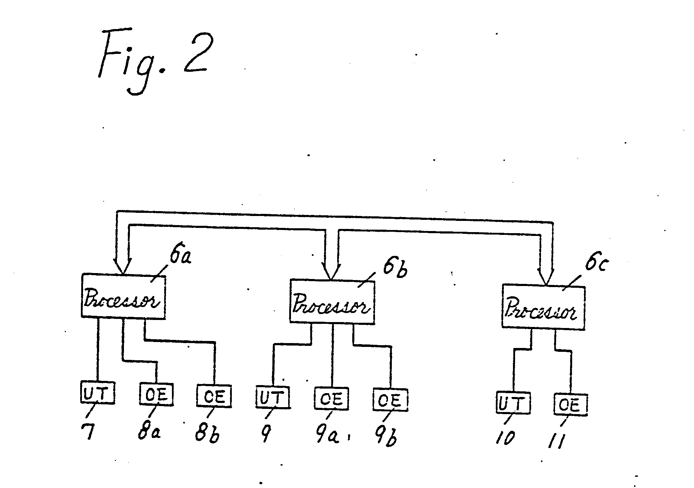

An example of a conventional office automation block diagram is shown in Fig. 2, in which reference numerals 6a, 6b and 6c designate processors, 7, 9 and 10 designate user terminals, and 8a, 8b, 9a, 9b and 11 designate various business machines (e.g., printers, plotters, intelligent copiers, and facsimiles).

This system is the dispersion processing system, which is a local network for mutually connecting computer equipments in the same building or factory.

It is inevitable that the systems in Figs. 1 and 2 will make rapid progress in the market. Both systems, however, at present connect equipments by use of coaxial cables or optical fiber cables, which are often wired under the floor (which is raised for the cable laying). Also, there are various kinds and a large number of cables, so that cable connection is complicated.  Hence, once the system is installed,
it is kept in a semi-fixed condition, whereby the user terminals' locations or business machines' locations are not easily
changed within the room.

Furthermore, when an office room is changed for reorganization of office workers, it is not easy to more the user
terminals or measuring equipments to another room, because
the system operation should be temporarily stopped, the cables
removed and conveyed to another room, wherein the cables are
replaced and reconnected, thus becoming usable.  Also, when
installation within the office is impossible, the aforesaid
laboratory automation system or office automation system,
cannot be introduced, so only an extremely small-scale system
is used.  Furthermore, demands of our informationized society
have recently increased the number of user terminals or business machines so that the defects in the aforesaid system
become very serious.

SUMMARY OF THE INVENTION

This invention has been designed to eliminate the aforesaid defects of the conventional examples.

An object of the invention is to provide a data transmission apparatus which needs no cable work and facilitates
installation, expansion, and change of system equipment.

Another object of the invention is to provide a data
transmission apparatus which is wireless for data transmission, for example, between a processor and user terminals, measuring equipments, or business machines, within the same room by means of light propagation through space using direct light or indirect light (catoptric light).

Still another object of the invention is to provide a data transmission apparatus which is capable of moving the user terminals and measuring equipments between different rooms with extreme ease.

A further object of the invention is to provide a data transmission apparatus which uses light waves to complete system structure without being restricted by the Radio Law, and is highly resistant to electromagnetic interference.

A still further object of the invention is to provide a data transmission apparatus which can have access to a number of terminal equipments by one optical transmitter.

These and other objects and features of the invention will become more apparent from the following detailed description of embodiments in accordance with the accompanying drawings., in which:-

Figs. 1 and 2 are block diagrams of the principal portions of the conventional laboratory automation system and office automation system.

Fig. 3 is a block diagram of the principal portion of an embodiment of a data transmission apparatus of the invention.

Fig. 4 is a block diagram of the principal portion of a modified embodiment of a data transmission apparatus of the invention.

Fig. 5 is a block diagram of an embodiment of an optical transmitter of the invention.

Fig. 6 is a block diagram of an embodiment of an optical receiver of the invention.

DESCRIPTION OF THE PREFERRED EMBODIMENTS

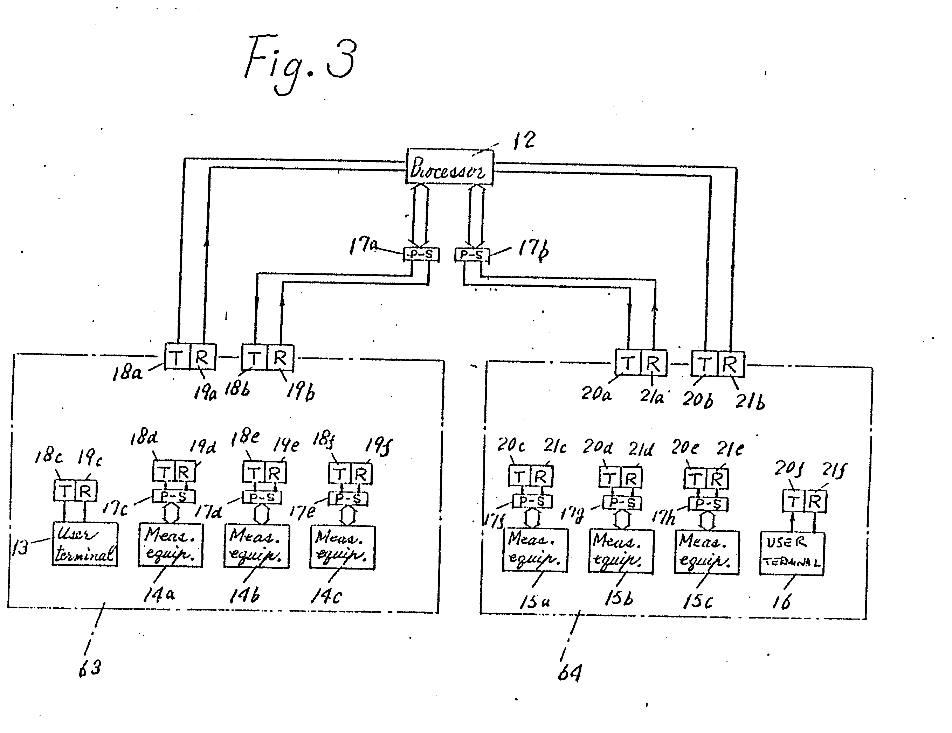

Firstly, a first embodiment (laboratory automation) of the invention will be detailed according to Fig. 3, in which reference numeral 12 designates a processor, 13 and 16 designate user terminals, 14a, 14b, 14c, 15a, 15b and 15c designate measuring equipments as the terminal equipments, 17a, 17b, 17c, 17d, 17e, 17f, 17g and 17h designate parallel data-serial data converters, 18a, 18b, 18c, 18d, 18e, 18f, 20a, 20b, 20c, 20d, 20e, and 20f designate optical transmitters, and 19a, 19b, 19c, 19d, 19e, 19f, 21a, 21b, 21c, 21d, 21e and 21f designate optical receivers. The input lines of optical transmitters 18a and 20b and the output lines of optical receivers 19a and 21b, are connected to processor 12, the input line of optical transmitter 18b and the output line of optical receiver 19b are connected to parallel data - serial data converter 17a, and the input line of optical transmitter 20a and the output line of optical receiver 21a are connected to parallel data - serial data converter 17b, parallel data - serial data converters 17a and 17b connecting with processor 12 through bus lines. The input line of optical transmitter 18c and the output line of optical receiver 19c are connected to user terminal 13, and the input line of optical transmitter 20f and the output line of optical receiver 21f are connected to user terminal 16. The input line of optical transmitter 18d and the output line of optical receiver 19d, the input line of optical transmitter 18e and the output line of optical receiver 19e, and the input line of optical transmitter 18f and the output line of optical receiver 19f, are connected to parallel data - serial data converters 17c, 17d and 17e respectively, parallel data - serial data converters 17c, 17d and 17e being connected to measuring equipments 14a, 14b and 14c respectively. The input line of optical transmitter 20c and the output line of optical receiver 21c, the input line of optical transmitter 20d and the output line of optical receiver 21d, and the input line of optical transmitter 20e and the output line of optical receiver 21e, are connected to parallel data - serial data converters 17f, 17g and 17h respectively, parallel data - serial data converters 17f, 17g and 17h being connected to measuring equipments 15a, 15b and 15c respectively.

The Fig. 3 embodiment includes control lines of two series (user terminals and measuring equipments) in the same room, the signal flowing up and down in the lines between the user terminals and the processor. In this embodiment in Fig. 3, the direct and indirect lights perform signal transmission, so that, for example, the light power radiated from optical transmitter 18c into the room is incident directly on optical receivers 19a and 19b and simultaneously reflected from the walls or ceiling of the room to be incident on optical receivers 19c, 19d, 19e and 19f. Hence, the frequencies of modulation carrier waves of optical transmitters and optical receivers are changed to prevent interference between the respective communication channels.

For example, a carrier wave of frequency $f_1$ is used for signal transmission between the optical transmitter 18a and the optical receiver 19c, a carrier wave of $f_2$ for transmission between optical transmitter 18c and optical receiver 19a, a carrier of $f_3$ for transmission between optical transmitter 18b and optical receiver 19d and between 19e and 19f, and a carrier wave of $f_4$ for transmission between 18d and 18e and between 18f and 19b. Such transmission condition is for room 63, and in room 64, similarly, a carrier wave of $f_1$ is used for transmission between 20b and 21f, that of $f_2$ for transmission between 20f and 21b, that of $f_3$ for transmission between 20a and 21c, 21d or 21e, and that of $f_4$ for transmission between 21a and 20c, 20d or 20e.

Next, explanation will be given on operation of this embodiment. Data transmitted from processor 12 is modulated by optical transmitter 18a in the carrier wave of frequency $f_1$, converted by a light-emitting element into an optical signal, and then radiated within room 63. This light power is incident on light-sensitive elements at optical receivers 19c, 19d, 19e, 19f, 19a and 19b to be photoelectric-converted, but is demodulated only by optical receiver 19c (matching the frequency $f_1$), the data signal being given to user terminal 13.

Then, the data signal output from user terminal 13 is converted by optical transmitter 18c into an optical signal to be radiated within room 63, the light power being incident on the light-sensitive elements at optical receivers 19a, 19b, 19c, 19d, 19e and 19f to be photoelectric-converted and demodulated to the electric data signal by optical receiver 19a (matching the carrier wave of frequency $f_2$), the electric data signal being given to processor 12.

On the other hand, the output of processor 12 is given through the bus line to parallel data - serial data converter 17a and converted into the serial data therewith, modulated by optical transmitter 18b into an optical signal, and then radiated within room 63, the optical signal being incident on the light-sensitive elements at optical receivers 19c, 19d, 19e, 19f, 19a and 19b, and demodulated into data signals only by optical receivers 19d, 19e and 19f (matching the modulation

carrier wave frequency $f_3$), the data signals being converted by parallel data - serial data converters 17c, 17d and 17e into parallel data signals and given to measuring equipments 14a, 14b and 14c, at which time if the data signal is assumed to have access to measuring equipment 14a, the equipment 14a only operates.

The above operation makes it possible, for example, to give data for dealing chits into user terminal 13 and calculate it by processor 12 so that the results are displayed on user terminal 13, or are outputted by a desired measuring instrument (e.g. a printer) among measuring instruments 14a, 14b and 14c. The system in room 64 operates similarly to the above.

The above construction can obtain the following effects:

(a) Since the signal can be transmitted or received wirelessly within the office, wirings are only between user terminals and measuring equipments and power source, thereby enabling equipment locations to be arranged as desired.

(b) The light radiated throughout the room makes it possible to increase the number of the user terminals and measuring equipments with ease.

(c) The user terminals and measuring equipments can readily be moved to another room.

(d) The use of light waves enables the system construction to not be restricted by the Law and Regulations (because not radio), and makes it quite free from interference from adjacent rooms.

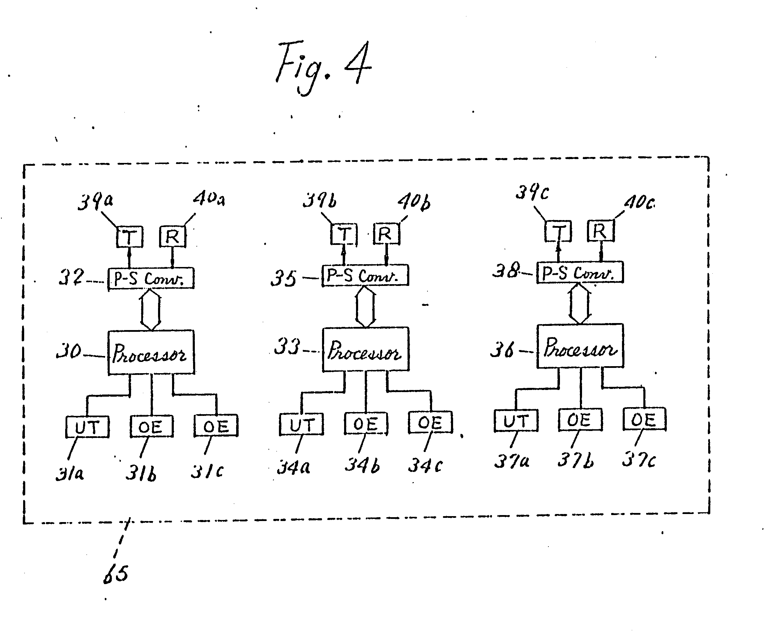

Next, explanation will be given on a second embodiment of an office automation system of the invention in accordance with Fig. 4. This embodiment applies light propagation through space to data transmission in Fig. 2. In Fig. 4, reference numerals 30, 33 and 36 designate processors, 31a, 34a and 37a designate user terminals, 31b, 31c, 34b, 34c, 37b and 37c designate business machines, such as facsimiles, printers or copiers, 32, 35 and 38 designate parallel data - serial data converters, and 39a, 39b, 39c, 40a, 40b, and 40c designate optical transmitters and optical receivers, connected to the output lines and input lines at processors 30, 33 and 36 through parallel data - serial data converters 32, 35 and 38, these instruments being disposed in the same room 65.

This embodiment performs data transmission between processors 30, 33 and 36 by means of light propagations through space between optical transmitters 39a, 39b and 39c and optical receivers 40a, 40b and 40c, so that data from processor 30 is converted into an optical signal by optical transmitter 39a and then transmitted to processors 33 and 36 through direct and indirect lights of the optical signal. Thus, this embodiment can be said to apply light propagation through space to local networks. Alternatively, the idea described in Fig. 3 may be introduced to connect by light communication through space between processors 30, 33 and 36 and user terminals 31a, 34a and 37a and business machines 31b, 31c, 34b, 34c, 37b and 37c.

In addition, in local networks, the number of processors may be increased with ease and also desirably located.

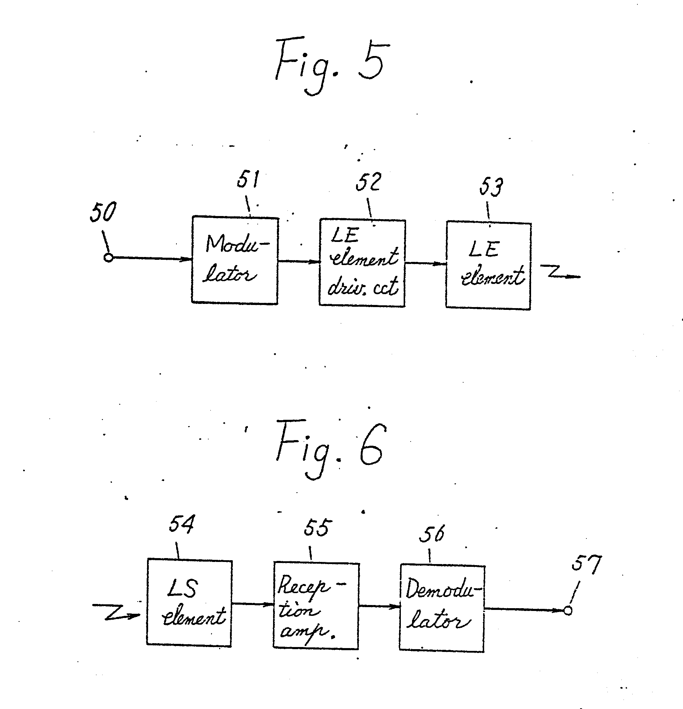

Next, explanation will be given on the optical transmitters and receivers usable for the invention with reference to Figs. 5 and 6. In the same drawings, reference 50 designates a data input terminal, 51 designates a modulator for data, 52 designates a light-emitting element driving circuit, 53 designates a light-emitting element, 54 designates a light-sensitive element, 55 designates a reception amplifier, 56 designates a demodulator for data, and 57 designates an output terminal. The data signal fed from data input terminal 50 is modulated by data modulator 52, the modulated signal driving light-emitting element 53, thereby being radiated as an optical signal into a space. The optical signal radiated in a space is photoelectric-converted by light-sensitive element 54, amplified by reception amplifier 55, converted into a data signal by data demodulator 56, and then outputted from data output terminal 57. The optical fiber communication directly drives the light-emitting element without modulating the data signal, but light communication through space is different from the optical fiber communication in the existence of noise light, namely, room light; the noise light is flickering in the light source with an inherent frequency.

Also, the light waves in a plurality of channels exist in the space of the same room as above.

For the above reasons, in this invention, the data signal, after once being modulated, drives the light-emitting element, whereby it is possible to ensure the communication channel of good quality. Alternatively, the light-emitting element may use a light-emitting diode or a laser diode and the light-sensitive element may use a photodiode, a PIN-photodiode, or an avalanche photodiode.

Also, the disposal of an optical filter before the light-sensitive element is largely effective in that the noise light is optically shut off - reducing its influence.

Next, explanation will be given on a modulation system applicable to this invention. Phase shift keying (PSK) allows the carrier phase to have information data and includes two-phase shift keying, four-phase shift keying, eight-phase shift keying and sixteen-phase shift keying, among which the proper one corresponding to an actual transmission channel needs to be used based on circuit scale or frequency efficiency. Especially, quarter-phase shift keying is often used and offset quarter-phase shift keying adapted to change phase only by $\pi/2$ is also often used. Frequency shift keying (FSK) allows the carrier frequency to have data information and is realizable by driving a voltage-controlled oscillator by the data signal. This includes various kinds of systems, such as a continuous phase frequency shift keying system which continues phase at the moment of data change, a minimum shift keying system keeping the modulation index 0.5, a tamed frequency modulation system using a prefilter to have the phase change diobinary characteristic, or a GMSK system performing extremely intense band limit by a gauss filter. The amplitude modulation system allows the carrier amplitude to carry the data information and thereby transmit it in burst. The amplitude-phase modulation system allows the amplitude and phase of carrier to carry the data information, which is high in frequency efficiency, but complex in circuitry and includes the sixteen bit QAM system, which has frequency availability four times larger than that of the two-phase shift keying system and also is characterized by a desired carrier to noise ratio smaller than the phase shift keying having the same transmission capacity.

Incidentally, this invention may of course be applicable to a computer room other than the aforesaid concrete embodiments.

CLAIMS:

1. A data transmission apparatus provided with a processor, optical receivers and optical transmitters, which are disposed at the processor side and connected to an input line and output line of said·processor respectively, terminal equipments, and optical receivers and optical transmitters, which are disposed at the terminal equipment side and connected to input lines and output lines of said terminal equipments respectively, so that data transmission between said terminal equipments and said processor is performed wirelessly by light propagation through space between said optical transmitters at the terminal equipment side and said optical receivers at the processor side, and between said optical transmitters at the processor side and said optical receivers at the terminal equipment side.

2. A data transmission apparatus according to claim 1, wherein when the frequency of modulation carrier wave for said optical receivers at the terminal equipment side and optical transmitters at the processor side is represented by $f_1$ and the frequency of modulation carrier wave for said optical transmitters at the terminal equipment side and optical receivers at the processor side by $f_2$, a relation of $f_1 \neq f_2$ is set.

3. A data transmission apparatus according to claim 1, wherein a plurality of terminal equipments having optical transmitters and optical receivers at the terminal equipment side, are disposed in one room, and a plural sets of optical transmitters and optical receivers are disposed at the processor side within said room respectively, said transmitters and receivers performing data transmission between an optical transmitter and an optical receiver which belong to a certain terminal equipment among said plural sets of terminal equipments.

4. A data transmission apparatus according to claim 3, wherein at least one set of said optical transmitter and optical receiver among the plural sets of said optical transmitters and optical receivers at the processor side, are connected to the output line and input line of said processor through a parallel data - serial data conversion means, and the plural sets of said optical transmitters and optical receivers at the terminal equipment side, which perform the data transmission with said at least one set of optical transmitter and optical receiver at the processor side, are connected to the input line and output line of said respective terminal equipments through parallel data - serial data conversion means respectively, so that said at least one set of optical transmitter and optical receiver allow a certain terminal equipment among said plurality of terminal equipments to have access to data transmission.

5. A data transmission apparatus according to claims 1, 2, 3 or 4, wherein said optical transmitters each comprises a modulator for data, a light-emitting element driving circuit, and a light-emitting element, connected in series to each other, said optical receivers each comprises a light-sensitive element, a reception amplifier, and a.data demodulator connected in series to each other, and a modulation system for said modulator for data and data demodulator, uses a modulation system which allows at least one of phase, frequency, and amplitude of the carrier wave to carry data information.

6.   A data transmission apparatus including a plurality of processors disposed in a room, said processors having a plurality of terminal equipments attached thereto and connecting at the input lines and output lines with optical receivers and optical transmitters through parallel data - serial data conversion means, so that said optical receiver and optical transmitter belonging to each of said processors, perform the data transmission between said respective processors wirelessly light propagation through space.

7.   A data transmission apparatus according to claim 6, wherein said optical transmitters each comprises a modulator for data, a light-emitting element driving circuit, and a light-emitting element, connected in series to each other, and said optical receivers each comprises a light-sensitive element, a reception amplifier, and a data demodulator connected in series to each other, and a modulation system for said modulator for data and data demodulator, employs a modulation system allowing at least one of phase, frequency and amplitude of the carrier wave to carry data information.

Fig. 1

Fig. 2

0091271

Fig. 3

Fig. 4

# Fig. 5

```
        51              52              53
50                  ┌────────┐    ┌────────┐    ┌────────┐
 ○──────────────→   │ Modu-  │ →  │  LE    │ →  │  LE    │ ──∼→
                    │ lator  │    │ element│    │ element│
                    └────────┘    │driv.cct│    └────────┘
                                  └────────┘
```

# Fig. 6

```
        54              55              56
    ┌────────┐    ┌────────┐    ┌────────┐           57
∼→  │  LS    │ →  │ Recep- │ →  │ Demodu-│ ──────────○
    │ element│    │  tion  │    │ lator  │
    └────────┘    │  amp.  │    └────────┘
                  └────────┘
```